# EUROPEAN PATENT SPECIFICATION

(11) **EP 3 161 529 B1**
(45) Date of publication and mention of the grant of the patent: **01.11.2017**
(21) Application number: 15739096.4
(22) Date of filing: 26.06.2015
(51) Int. Cl.: G02B 5/32, G03H 1/22

(54) **OPTICAL SYSTEM WITH VOLUME HOLOGRAM FOR OPTIC ILLUMINATION**
OPTISCHES SYSTEM MIT EINEM VOLUMENHOLOGRAMM ZUR OPTISCHEN BELEUCHTUNG
SYSTEME OPTIQUE COMPRENANT UN HOLOGRAMME VOLUMIQUE POUR ÉCLAIRAGE OPTIQUE

(30) Priority: 30.06.2014 US 201414320290
(43) Date of publication of application: 03.05.2017
(73) Proprietor: Microsoft Technology Licensing, LLC, Redmond, WA 98052-6399 (US)
(72) Inventor: GEORGIOU, Andreas, Redmond, Washington 98052-6399 (US); KOLLIN, Joel S., Redmond, Washington 98052-6399 (US); EMERTON, Neil, Redmond, Washington 98052-6399 (US)
(74) Representative: CMS Cameron McKenna Nabarro Olswang LLP
(86) International application number: PCT/US2015/037842
(87) International publication number: WO 2016/003773

(56) References cited:
- WO-A1-2010/142737
- US-A1- 2012 092 750
- US-A1- 2013 170 004
- US-B1- 6 301 026

## Description

### BACKGROUND

An optical system includes an image-forming optic illuminated by an illumination source to produce a viewable image. Image forming optics is reflective, such that an image is formed by modulating light reflected from the image-forming optic.

US2012/092750 provides a lighting device having a planer optical fiber and at least one light source device for illuminating a controllable spatial light modulator, wherein the optical fiber comprises a light-conducting core and a cover coating, and the light modulator comprises a pixel matrix, the light source device is disposed on the side of the optical fiber, and the light emitted by at least one light source of the light source device propagates laminarly in the optical fiber.

### SUMMARY

Examples are disclosed that relate to the use of a volume hologram in a holographic projection system. For example, one disclosed embodiment provides an optical system comprising an illumination source configured to emit coherent light, a volume hologram positioned to receive and diffract the coherent light, and a reflective holographic image-forming optic arranged downstream of the volume hologram and configured to receive the coherent light diffracted by the volume hologram and to spatially modulate the coherent light to form an image wherein the reflective holographic image forming optic has an exit pupil and the volume hologram is situated within the exit pupil of the reflective holographic image forming optic, wherein the system is arranged such that rays diffracted by the volume hologram are incident at normal incidence on the reflective holographic image forming optic; and wherein the volume hologram is configured to receive and diffractively divert zero order light reflected by the reflective holographic image-forming optic, and to pass undiffracted the light reflectively diffracted by the reflective holographic image-forming optic towards the exit pupil of the reflective holographic image-forming optic.

Another disclosed embodiment provides a method to form an image, comprising emitting a first beam of coherent light, receiving, at a first volume hologram, the first beam of coherent light and diffracting the first beam of coherent light into a second beam expanded in one dimension, receiving, at a second volume hologram, the second beam of coherent light and diffracting the second beam of coherent light into a third beam expanded in a second, different direction; and receiving the third beam of coherent light at a reflective holographic image-forming optic arranged downstream of the second volume hologram and spatially modulating such light to form the image; wherein the reflective holographic image forming optic has an exit pupil and the second volume hologram is situated within the exit pupil of the reflective holographic image forming optic; wherein the system is arranged such that rays diffracted by the second volume hologram are incident at normal incidence on the reflective holographic image forming optic; and wherein the second volume hologram is configured to receive and diffractively divert zero order light reflected by the reflective holographic image-forming optic, and to pass undiffracted the light reflectively diffracted by the reflective holographic image-forming optic towards the exit pupil of the reflective holographic image-forming optic.

### BRIEF DESCRIPTION OF THE DRAWINGS

FIGS. 1 and 2 show aspects of unclaimed optical systems for illumination of an image-forming optic.
FIG. 3 shows aspects of an example optical system utilizing a volume hologram to illuminate an image-forming optic.
FIG. 4 shows aspects of an example volume hologram for illumination of an image-forming optic.
FIGS. 5, 6, and 7 show aspects of additional example optical systems in which an image-forming optic is illuminated.
FIG. 8 shows exit pupil expansion using volume holograms.
FIG. 9 shows a flow diagram illustrating an example method for expanding an exit pupil.
FIG. 10 shows the illumination of a reflective image-forming optic using reflective and transmissive volume holograms.
FIG. 11 shows the illumination of an unclaimed transmissive image-forming optic using reflective and transmissive volume holograms.

### DETAILED DESCRIPTION

A continuing goal in modem, optical engineering is to create optical systems of reduced size and dimensionality for device applications. Examples include thinner flat-screen display panels and miniaturized projection optics for near-eye displays. As mentioned above, an optical system may include an image-forming optic illuminated by an illumination source. Such a system may be engineered with components spaced apart, to prevent the illumination source from obstructing the exit pupil of the image-forming optic. This may result, however, in an undesirably large configuration. Furthermore, if the image-forming optic is holographic or grating-based, unwanted zero-order or other diffraction components may appear in the exit pupil.

Accordingly, examples are disclosed herein that provides for compact optical systems utilizing holographic image components while avoiding the appearance of zero-order or other unwanted diffraction components. Briefly, an image-forming optic is illuminated with coherent light through one or more volume holograms (*e.g*., volume Bragg gratings). As described in further detail herein, a volume hologram is situated within the exit pupil of an image-forming optic without obstructing the formed image. This configuration enables a reflective image-forming optic to be illuminated at near-normal incidence, for sharp image resolution and other advantages. Moreover, a volume hologram is engineered to remove the unwanted zero- or higher-order component from a coherently illuminated holographic or grating-based reflective optic.

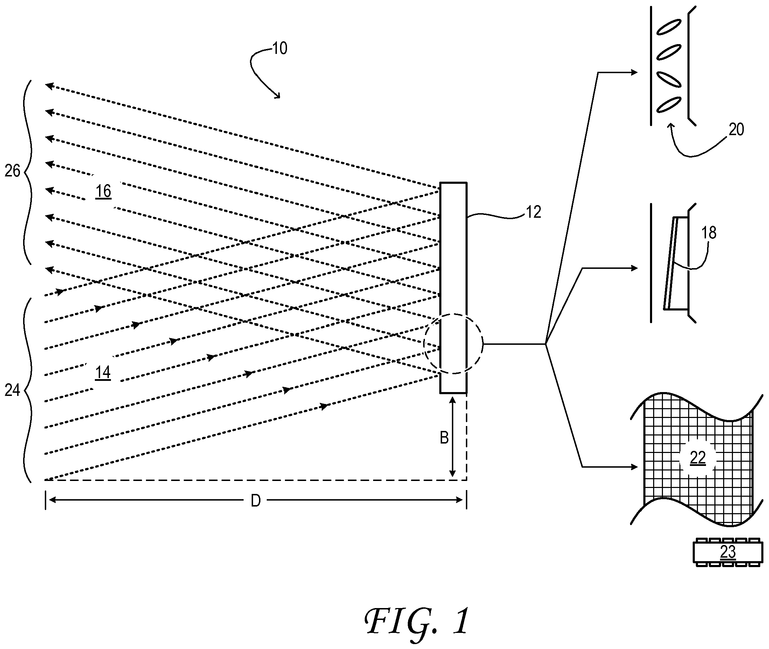

FIG. 1 shows aspects of an unclaimed optical system 10 with an illuminated image-forming optic 12. In this example, the image-forming optic is a reflective optic; it may represent a diffraction grating, an image-forming hologram, or virtually any type of optic that receives incident light 14, reflects and spatially modulates at least a portion of the incident light to form an image 16. In some examples, the reflective properties of the image-forming optic are static-*i*.*e*., permanently, materially engineered into the optic. In other examples, the reflective properties of the image-forming optic are dynamic-*i.e.,* reconfigurable and/or controllable. For example, the image-forming optic may include one or more electro-mechanical elements, such as piezo-mounted mirrors 18 that change the direction of the reflected light in response to changing electrical input. In other examples, the image-forming optic may include one or more electro-optical elements or layers-*e*.*g*., a liquid-crystal (LC) layer 20-that controllably influences the polarization state of the reflected light so its intensity can be modulated through polarizing filtering, or the phase of the incident beam so intensity can be modulated though wave interference (diffraction) of the device pixels.

In some examples, at least some image content may be encoded in the incident light 14 that illuminates image-forming optic 12. There, the role of the image-forming optic may be to change some property of the encoded image-its position, focal plane, orientation, brightness, polarization state, or correct for optical aberrations, *etc.* In other examples, the incident light may provide neutral (*i.e.,* non-image carrying) illumination of the image-forming optic, whose role is to form the desired image by releasing an engineered or controlled reflection.

In some examples, image-forming optic 12 may be configured in the form of a pixel array 22, in which each pixel is an individually addressable electro-mechanical or electro-optical element. Such a configuration may be incorporated in a digital display system having an electronic controller 23 operatively coupled to the pixel array. In these examples, the electronic controller directs formation of the display image by sending an appropriate control signal to each pixel of the array, which controls the light modulation of the reflected light from that pixel. Accordingly, the image-forming optic may be a digital micromirror device (DMD), in one example. In other examples, the image-forming optic may be a reflective liquid-crystal-on-silicon (LCOS) array, or virtually any other type of pixel array that forms an image by reflection of any portion of the illumination incident upon it.

LC display systems with reflective image-forming optics may exhibit higher speed (*e.g.,* refresh rate) and efficiency than those with transmissive image-forming optics. This is because the LC layer can be made thinner, due to the geometric doubling of the optical path through the layer. This also may help to increase speed, as thinner LC layers may take less time to return to the homogenous state. Resolution also may be improved, as fringing fields between pixels are less significant. Further efficiency gains in LCOS displays result from the pixel-addressing electrodes being arranged behind the LC layer and out of the optical path. This not only may reduce unwanted absorption, but also may enable the pixels to almost touch each other. The greater fill factor relative to transmissive arrays results in better display contrast.

The efficiency of an LCOS display can be further improved if light intensity, rather than being absorbed at each pixel of the image-forming optic, interferes constructively and destructively so as to form the display image. An image-forming optic referred to as an LCOS spatial light modulator (LCOS-SLM) achieves that effect. The LCOS-SLM is an example of a dynamically reconfigurable hologram based on an array of electro-optical pixel elements. By controlling the orientation of the LC molecules, the LCOS-SLM imparts an individually controllable phase delay to light reflecting from each pixel of the array. In an example application, the illumination incident on the array is monochromatic, at least during a time slice, and coherent with a substantially flat wave front.

Image-forming optics 12, as described herein, may be incorporated in various display systems: large-format displays for televisions and home-theatre systems, smaller, flat-panel displays for laptop computers, and energy-efficient displays for tablet computers, smartphones, and handheld game systems, for example. Moreover, the image-forming optics and associated componentry can be miniaturized for use in near-eye display technology, such as head-mounted displays (*e.g.* in the form of goggles, glasses, helmets, visors, *etc.,* as non-limiting examples).

Returning now to FIG. 1, image-forming optic 12 is shown having an entry pupil 24 and an exit pupil 26. The size and orientation of the entry and exit pupils is shown by way of example; different sizes and orientations may also be used. In FIG. 1, the image-forming optic is illuminated at about 15 degrees from normal incidence (angles of incidence and observation are expressed herein relative to the surface normal). Illumination at relatively low angles of incidence may present both advantages and disadvantages. For certain types of image-forming optics-*e*.*g*., an LCOS with a front plate-unwanted specular reflection may be reduced at lower incidence angles. Moreover, low-angle illumination yields low-angle reflection, which is desirable for an image-forming optic, as blurring between pixels may increase with increasing observation angle. On the other hand, low-angle illumination may require the illumination source to eclipse exit pupil 26*-i.e*., to lie between the image-forming optic and the observer-which is undesirable. Also, as shown in FIG. 1, placing the illumination source just outside of the exit pupil may increase both the depth D of the optical system, and the size of the non-image forming border B around the image-forming optic, with the depth being greater at the lower incidence angles.

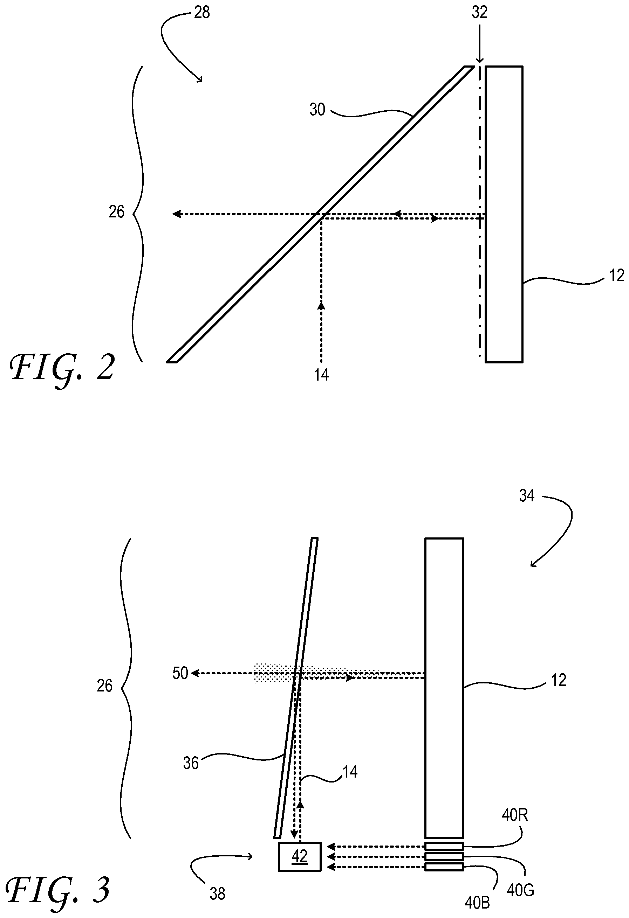

FIG. 2 shows aspects of another unclaimed optical system 28, in which a reflective image-forming optic 12 is illuminated at an even lower angle of incidence relative to a normal of the image producing element surface. In the illustrated configuration, a beam splitter 30 (*e.g.,* a half-silvered mirror) is arranged across exit pupil 26 at a 45-degree angle. This approach conserves space around the periphery of the image-forming optic, but increases the depth of the optical system to the entire width of the optic. Moreover, it may waste about 75% of the incident light intensity, because half the intensity is lost on each encounter with the beam splitter. For greater efficiency, a circularly polarizing beam splitter may be used, in combination with a quarter-wave plate positioned at 32. However, this arrangement may utilize as much depth and also may be incompatible with an image forming device sensitive to polarization state, like LCOS devices configured for phase modulation, and static gratings and diffractive optical-element (DOE) arrays in which the feature size is small enough so that polarization effects become significant.

Accordingly, FIG. 3 shows aspects of an optical system 34 according to the invention that may help to address the geometric and exit-pupil eclipsing issues noted above, and provide still other advantages. In particular, FIG. 3 shows volume hologram 36 and coherent illumination source 38. The coherent illumination source directs a beam of coherent incident light 14 onto the volume hologram. The volume hologram 36 is arranged opposite image-forming optic 12 in the depicted example, and is configured to receive the coherent light and to reflect the coherent light onto the image-forming optic at near-normal incidence. In one unclaimed example, the volume hologram may be illuminated at about 80 degrees of normal, though higher and lower incidence angles are contemplated as well. In this configuration, the image-forming optic receives the coherent light from the volume hologram and projects the coherent light back through the volume hologram to form an image in exit pupil 26.

In the example of FIG. 3, coherent illumination source 38 includes a red laser 40R, a green laser 40G, and a blue laser 40B. More generally, coherent light may be emitted from a number of sources including single mode lasers, multimode lasers, superluminescent diodes (SLDs) and even certain LEDs. Fully coherent light is not an absolute requirement but the spatial and temporal coherence should be such that light can be diffracted and form an image. The beams from each laser are combined in beam-conditioning optic 42, which aligns the beams along the same optical axis and adjusts the exit pupil of the aligned beams to the desired geometry. In one implementation, the beam may be relatively long and narrow-*e*.*g*., 20 x 2 millimeters (mm) in cross section-with the long edge parallel to the illuminated face of the volume hologram and to the illuminated face of the image-forming optic. In one implementation, the short edge of the beam may be normal to the illuminated face of the image-forming optic, though other geometries are contemplated as well. Combined use of red, green, and blue lasers in the coherent illumination source enables a color image to be formed at image-forming optic 12. This feature, however, is in no way necessary. In other implementations, a monochromatic image may be desired, and there, the coherent illumination source may include only one laser. In general, the coherent illumination source may include lasers of any visible or invisible wavelength (infrared, near-infrared, ultraviolet) and provide a substantially flat wave front for each wavelength.

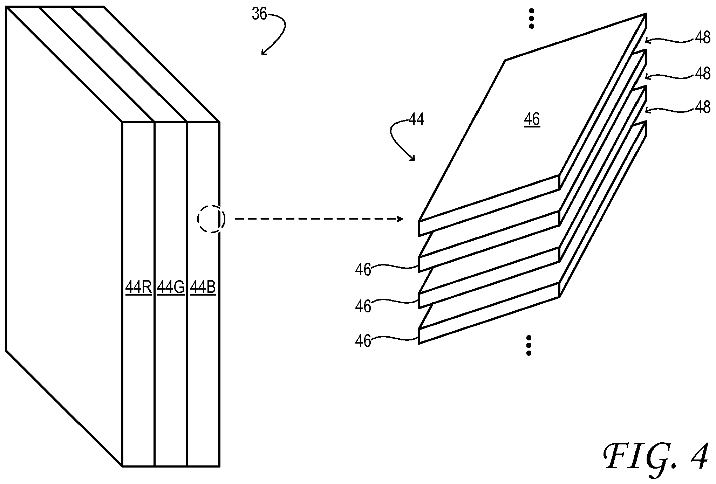

FIG. 4 shows aspects of one example of a volume hologram 36. The illustrated volume hologram includes three different Bragg gratings 44 arranged in parallel layers-a first Bragg grating 44R to diffract red light, a second Bragg grating 44G to diffract green light, and a third Bragg grating 44B to diffract blue light. Each Bragg grating includes a series of substantially planar regions 46 of a first refractive index, arranged in parallel in a substrate material 48 of a second refractive index, higher or lower than the first. Each Bragg grating may efficiently reflecting light of a narrow range of wavelengths when such light is received over a narrow range of incidence angles. Light received outside of the narrow wavelength and incidence-angle ranges is transmitted with high efficiency. Moreover, the wavelength and incidence-angle ranges are selectable, being determined by the orientation and pitch of planar regions 46, which are 'burned in' during recording of the volume hologram. In particular, the angle of release of the diffracted rays is determined by the period of the Bragg grating, while the angle of the rays that will excite the grating is determined by the direction of the grating vector. Furthermore, angular selectivity increases with the thickness of the Bragg grating; a thickness of 25 - 100 microns may provide an angular sensitivity of one degree.

The fact that each Bragg grating may be transparent to light outside of its selected wavelength range makes it possible to combine two, three, or more Bragg gratings in a stacked configuration, as shown in FIG. 4. In practice, equivalent incidence and reflection angles may be selected for all three Bragg gratings, so that the stack of Bragg gratings can receive red, green, and blue light in the same beam and reflect all three colors in the same direction, to illuminate the image-forming optic at the same near-normal incidence. In other implementations, different Bragg gratings may be configured to receive light at different incidence angles and to illuminate the image-forming optic at the same or different incidence angles.

As noted above, each Bragg grating 44 redirects the incident beam by an angle determined by its grating period. Therefore, rays are incident on the image-forming optic at normal or near-normal incidence even though the volume hologram is not oriented 45 degrees to exit pupil 26, as a conventional beam splitter would be. This feature may help to reduce the depth of optical system 34, potentially by orders of magnitude, relative to optical systems 10 or 28.

While the stacked Bragg-grating configuration of FIG. 4 may be used in some implementations, it is also possible to record two, three, or more Bragg gratings superposed in the same volume, using light of different wavelengths in concurrent or sequential exposures of the photopolymer. In such a hologram, the three superposed Bragg gratings still function independently. Naturally, if a monochromatic image is desired, volume hologram 36 may include a single Bragg grating for that color. Furthermore, other types of volume holographic structures besides Bragg gratings may be used to achieve analogous results. Examples include configurations where the volume hologram incorporates a holographic lens to focus or defocus the incoming or reflected beam.

The optical system of FIG. 3 addresses the geometric and exit-pupil eclipsing issues noted above. For example, volume hologram 36 can be fabricated as a thin overlay on image-forming optic 12. In such a configuration, the front glass or plastic cover of the image forming device may incorporate the volume Bragg grating. The front cover may be inclined at a small angle compared to the plane of the image forming optic. The thickness increase due to the volume hologram is minimal (of the order of 100 µm), and the depth increase due to the inclination of the front cover will be small for a small device and inclination angle. Second, the non-image forming border around the image-forming optic may be just wide enough to accommodate coherent illumination source 38. Third, it is noted that Bragg gratings 44 are transparent outside of the narrow range of angles in which incident light is diffracted. For the light reflecting from image-forming optic 12, this narrow range is centered on axis 50, where the incidence and observation angles are equal. Accordingly, exit pupil 26 of the image-forming optic will appear unobstructed to the observer, except in the neighborhood of axis 50, and parallel observation axes, where the volume hologram diverts the reflected image light back in the direction of coherent illumination source 38. In practice, image rays may be rejected over a small range of angles, both horizontal and vertical, relative to the incidence angle or over a large range of angles.

Diversion of the reflected image light provides an efficient and highly selective mechanism to separate the zero order diffraction component of an image formed by a holographic image source, but also may create a small dark spot in the middle of the image. The zero-order component is a result of the fact that no grating or hologram is 100% efficient in terms of its utilization of incident light. For a reflective image-forming optic, the zero-order component may appear as a specular reflection of a portion of the incident light, which is reflected along with the formed image. For a transmissive image-forming optic, the zero-order component is simply an undiffracted transmission. In both cases, the zero-order component may take the form of a bright spot at the center of the formed image.

In embodiments in which image-forming optic 12 is holographic or grating-based, however, the zero-order component of incident illumination 14 is reflected along axis 50, where the observation and incidence angles are equal. As noted above, this is the same angle that volume hologram 36 is designed to remove from the formed image-*viz*., to reflect back along its initial path to coherent illumination source 38, where the light may be absorbed and/or recycled. This effect may blot out not only the unwanted zero-order component, but also any image content projected parallel or nearly parallel to 50. To remedy such issues, since image-forming optic 12 is holographic-*e*.*g*., an LCOS-SLM-it can be configured to encode a Fresnel lens or other aberration. In some examples, an effect of the aberration is to shift the focal plane of the formed image. Although such an optic will release numerous rays parallel to the zero-order component, all rejected by volume hologram 36, the rejected rays will now originate from all portions of the image, instead of one cluster in the middle of the image. Thus, the image content is protected at the expense of a minor reduction in brightness. By definition, the zero-order component experiences none of the phase modulation induced by the image-forming optic, and therefore is not diverted by a holographic Fresnel lens or other aberration. Thus, removal of the unwanted zero-order illumination reflection remains efficient.

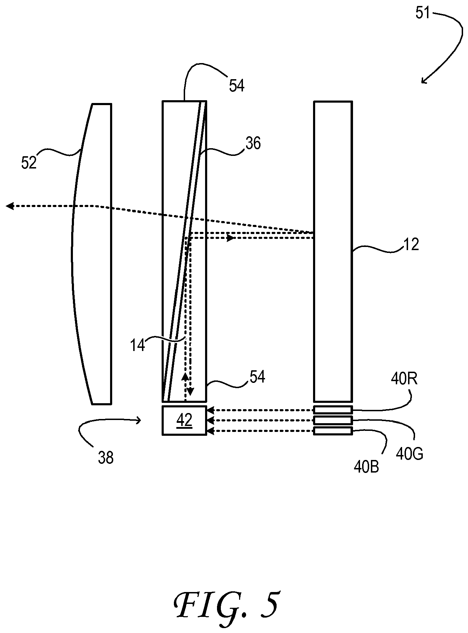

Such a method of mitigating the presence of a black spot in the center of the image also changes the vergence of the formed image. In some implementations, this effect may be acceptable, or even desirable. However, in some implementations, it may be desirable to restore the original vergence, or otherwise further adjust the vergence. FIG. 5 shows aspects of a related optical system 51, in which the original image vergence may be restored or further adjusted. Here, a physical lens 52 (*e.g.,* a refractive or diffractive lens) is positioned in front of volume hologram 36. The physical lens, depending on its focal length and other properties, may be configured to shift the focal plane of the formed image back to its original position, or to shift it further in the same direction as the encoded Fresnel lens. FIG. 5 also shows that the volume hologram may be sandwiched between a pair of thin-layer prisms 54. The prisms may be index-matched to the grating material to avoid Fresnel reflections from substrate material 48 of the volume hologram. As an alternative, the volume hologram may include an antireflective coating-*e.g.,* an interference filter. In some aspects, physical lens 52, the sandwiched volume hologram 36, and image-forming optic 12 may be integrated into the same optical component.

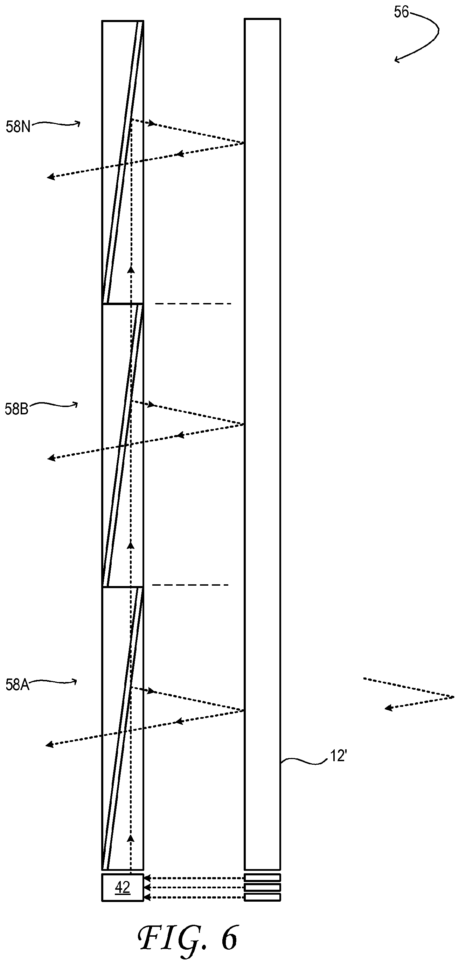

FIG. 6 shows aspects of a related optical system 56 that can be used to illuminate a larger image-forming optic 12'. In FIG. 6, volume hologram 36' is divided into a plurality of sections 58 arranged end-to-end to span the image-forming optic. Each volume-hologram section includes one or more Bragg gratings that divert the incident light onto a corresponding section of the image-forming optic. In this embodiment, only the Bragg gratings of end section 58N have unit diffraction efficiency. The others have lower diffraction efficiency and function, therefore, as beamsplitters. In other words, all but the final volume-hologram section 58N transmits some of the incident light to the adjacent section, by virtue of very oblique incidence or multiple reflections. Although FIG. 6 shows three volume hologram sections, other optical systems may include more or fewer sections. For display applications, the diffraction efficiencies for each section may be designed-in to effect a substantially uniform illumination of all the corresponding sections of the image-forming optic. This approach may reduce the total thickness of the volume-hologram assembly by a factor equal to the number of volume hologram sections. It will be noted that any inaccuracy in the angular position of the volume hologram may be corrected at the image-forming optic, if the image-forming optic is holographic and dynamically reconfigurable (*e.g.*, an LCOS-SLM).

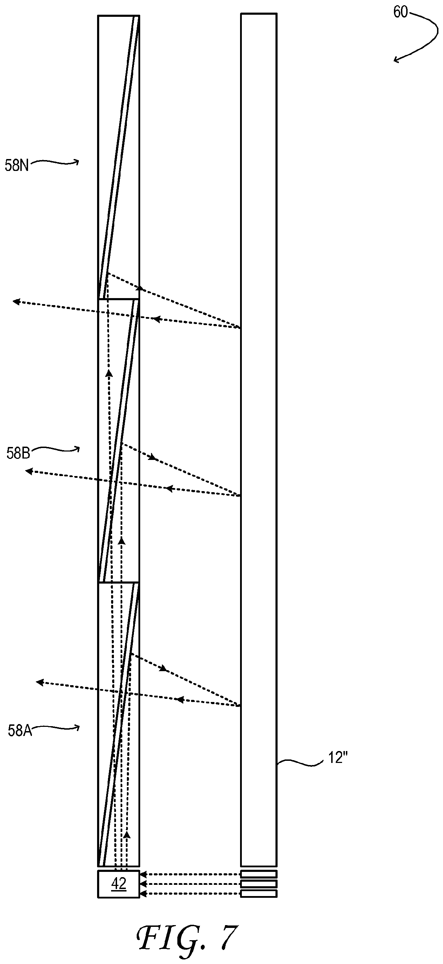

The implementation of FIG. 6 may not provide for complete removal of a zero-order diffraction component, as diffraction by some of the volume hologram sections is less than 100% efficient. FIG. 7, however, shows aspects of a related optical system 60, that may provide zero-order removal for larger holographic and grating-based image-forming optics 12". In this configuration, each volume hologram section 58 is excited at a different incidence angle, but diffracts in the same direction. Here, the incident light is provided over a range of angles. Ideally, a given incident ray will excite one Bragg grating and ignore the others. In some versions, a weak diffraction grating coupled in beam-conditioning optic 42 may be used to create the required distribution of incidence angles.

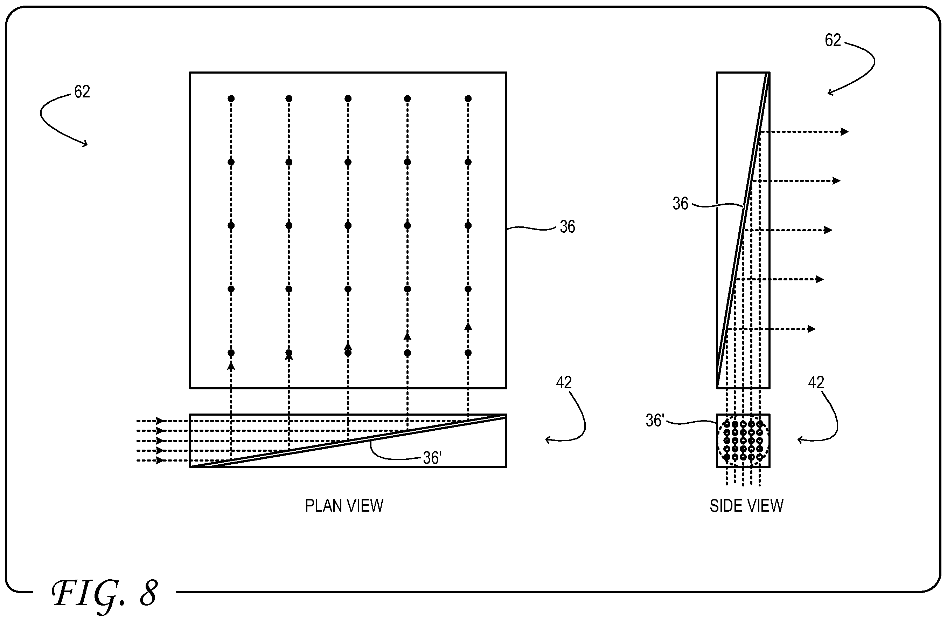

As noted above, the foregoing optical systems take advantage of the exit-pupil expanding feature of the volume hologram 36 when illuminated at very large angles of incidence. Accordingly, a relatively long and narrow incident beam (*e.g.* 2 x 20 millimeters) may provide substantially uniformly illumination of image-forming optic 12. In some configurations, such as the one illustrated in FIG. 8, the exit-pupil expanding feature may be applied in two or more directions. In this example, beam-conditioning optic 42 includes a first volume hologram 36' configured to receive a cylindrical first beam of coherent light-in some cases a combined beam from lasers 40 (of FIG. 5). The first volume hologram expands the beam in one dimension, to release a long and narrow second beam that impinges on second volume hologram 36. The second volume hologram is configured to receive the second beam of coherent light and to release a third beam of coherent light expanded in a second, orthogonal direction. An image-forming optic (not shown in FIG. 8) may be arranged opposite the second volume hologram and configured to receive the third beam of coherent light and to project such light back through the volume hologram to form the desired image. In the plan view of FIG. 8, closed circles indicate that the diffracted rays are exiting normal to the page. In the side-on view, open circles indicate that the incident rays are entering normal to the page.

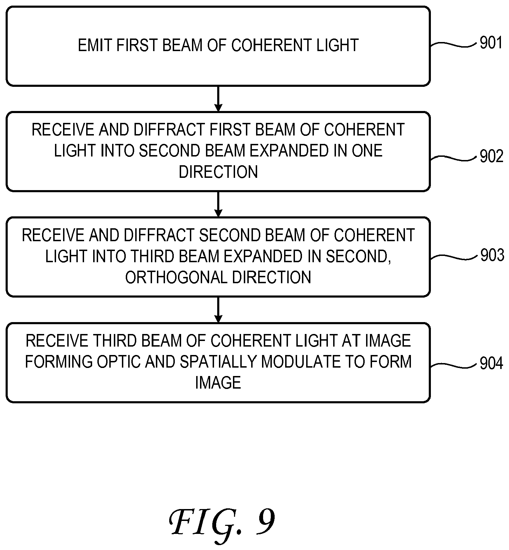

FIG. 9 shows a flow diagram illustrating a example of a method for expanding a coherent beam in orthogonal directions and using the expanded beam to illuminate an image-forming optic. At 901, a first beam of coherent light is emitted-by one or more lasers, for example. At 902, the first beam of coherent light is received and diffracted by a first volume hologram, which yields a second beam of coherent light expanded in one direction. At 903, the second beam of coherent light is received and diffracted by a second volume hologram, which yields a third beam further expanded in a second direction. At 904, the third beam of coherent light is received at an image forming optic and spatially modulated to form the desired image.

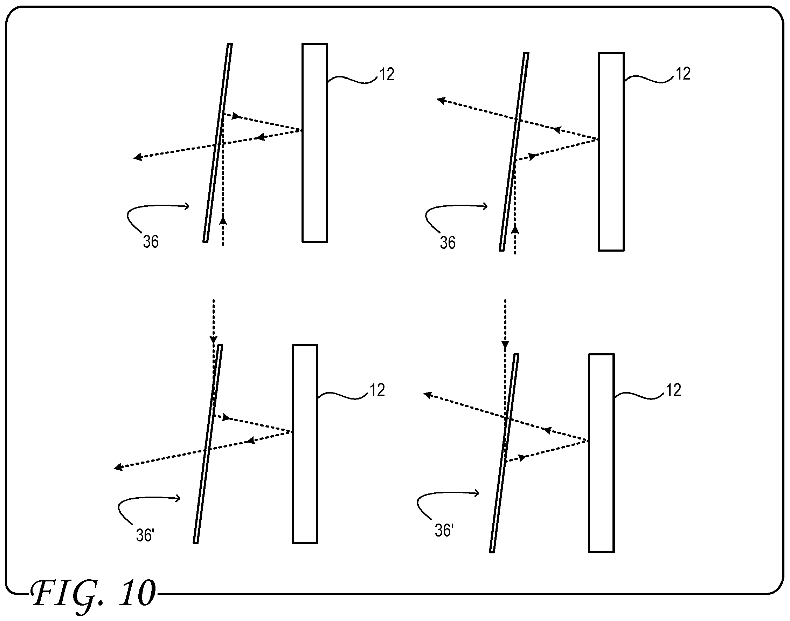

The foregoing optical systems include a primarily reflective image-forming optic 12 and volume hologram 36. In unclaimed examples, the image-forming optic may be configured to form an image by transmissively spatially modulating the coherent illumination. A see-through display system, for example, may incorporate an optical system in which a transmissive image-forming optic is backlit via a volume hologram. In other implementations, the volume hologram itself may be transmissive. FIG. 10 shows a variety of illumination arrangements for differently configured volume holograms. The volume holograms 36 in the upper row of the drawing reflect coherent light onto the associated image-forming optic; the volume holograms 36' in the lower row transmit coherent light onto the associated image-forming optic. Each configuration lies fully within the scope of this disclosure.

The foregoing description emphasizes display applications. However, this approach is not limited to display technology, but extends to other areas as well. Any of the configurations of FIG. 10, for example, can be used in a structured-light projector that projects coherent infrared illumination via image-forming optic 12, in the form of a static holographic reflective filter or DOE array, reflective or transmissive. Such a configuration may be used to cover a scene (located in the direction of the outgoing ray) with a repeating pattern of illumination features. An image that resolves such features can be used to three-dimensionally map the scene. However, the image-forming optic may also reflect a zero-order component, which could be hazardous to the user, or may corrupt the accuracy of the mapping. By illuminating the holographic filter through volume hologram 36, the zero-order component is attenuated.

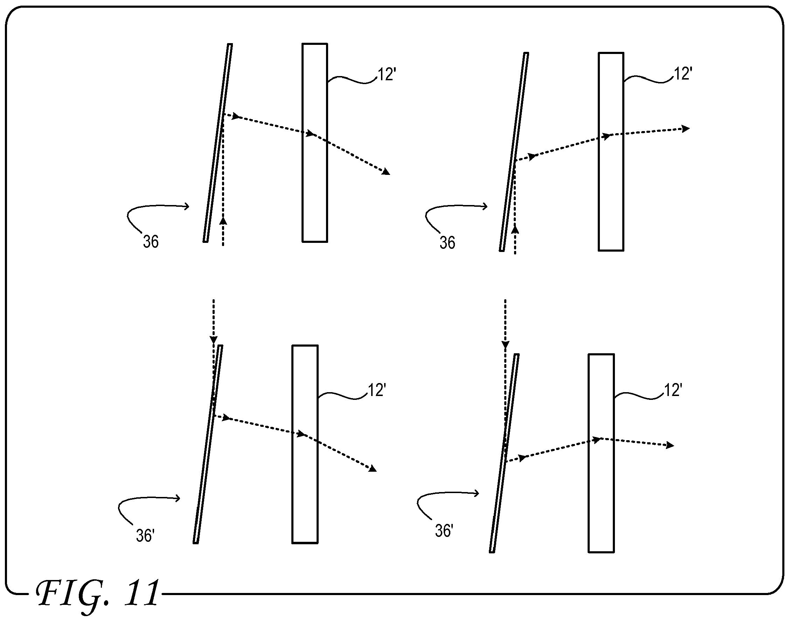

Furthermore, FIG. 11 shows unclaimed example illumination geometries involving a transmissive image-forming optic 12' and a reflective or transmissive volume hologram-36 or 36', respectively. It will be emphasized that the incidence and illumination angles shown in the drawings are chosen primarily for purposes of illustration. Other angles and ranges of angles may be used instead, including normal incidence.

It will be understood that the configurations and/or approaches described herein are exemplary in nature, and that these specific examples or implementations are not to be considered in a limiting sense, because numerous variations are possible. Further, the subject matter of this disclosure includes every feasible combination and sub-combination of the various systems, configurations, and properties disclosed herein, as well as any and all equivalents thereof. For instance, a system, component, or property described with reference to any one of the drawing figures may be incorporated into a system or component illustrated in any other drawing figure, the modified system remaining within the scope of this disclosure which is ultimately limited by the appended claims.

## Claims

1. An optical system comprising:
an illumination source (38) configured to emit coherent light (14);
a volume hologram positioned to receive and diffract the coherent light (14); and
a reflective holographic image-forming optic (12) arranged downstream of the volume hologram and configured to receive the coherent light (14) diffracted by the volume hologram and to spatially modulate the coherent light (14) to form a desired image (16);
wherein the reflective holographic image forming optic (12) has an exit pupil and the volume hologram is situated within the exit pupil of the reflective holographic image forming optic (12);
wherein the system is arranged such that rays diffracted by the volume hologram are incident at normal incidence on the reflective holographic image forming optic (12); and
wherein the volume hologram is configured to receive and diffractively divert zero order light reflected by the reflective holographic image-forming optic, and to pass undiffracted the light reflectively diffracted by the reflective holographic image-forming optic towards the exit pupil of the reflective holographic image-forming optic (12).

2. The optical system of claim 1, wherein the image-forming optic (12) includes an image-forming hologram comprising an encoded Fresnel lens configured to shift a focal plane of the formed image (16).

3. The optical system of claim 2, further comprising a physical lens (52) arranged downstream of the volume hologram and configured to further shift the focal plane of the formed image (16).

4. The optical system of claim 1, wherein the volume hologram is configured to reflect the coherent light (14) onto the image-forming optic (12).

5. The optical system of claim 1, wherein the volume hologram is configured to transmit the coherent light (14) onto the image-forming optic (12).

6. The optical system of claim 1, wherein the volume hologram includes one or more Bragg gratings (44).

7. A method to form an image (16), comprising:
emitting a first beam of coherent light (14);
receiving, at a first volume hologram, the first beam of coherent light (14) and diffracting the first beam of coherent light (14) into a second beam expanded in one dimension;
receiving, at a second volume hologram, the second beam of coherent light (14) and diffracting the second beam of coherent light (14) into a third beam expanded in a second, different direction; and
receiving the third beam of coherent light (14) at a reflective holographic image-forming optic arranged downstream of the second volume hologram and spatially modulating such light to form the desired image (16);
wherein the reflective holographic image forming optic (12) has an exit pupil and the second volume hologram is situated within the exit pupil of the reflective holographic image forming optic (12);
wherein the system is arranged such that rays diffracted by the second volume hologram are incident at normal incidence on the reflective holographic image forming optic (12); and
wherein the second volume hologram is configured to receive and diffractively divert zero order light reflected by the reflective holographic image-forming optic, and to pass undiffracted the light reflectively diffracted by the reflective holographic image-forming optic (12) towards the exit pupil of the reflective holographic image-forming optic (12).

## Patentansprüche

1. Optisches System, umfassend:
eine Beleuchtungsquelle (38), die dafür konfiguriert ist, kohärentes Licht (14) zu emittieren;
ein Volumenhologramm, das zur Aufnahme und zum Brechen des kohärenten Lichts (14) positioniert ist; und
eine reflektierende holographische bildformende Optik (12), die dem Volumenhologramm nachgelagert angeordnet ist, und dafür konfiguriert ist, das kohärente Licht (14), das von dem Volumenhologramm gebrochen wurde, zu empfangen und das kohärente Licht (14) räumlich zu modulieren, um ein gewünschtes Bild (16) zu formen;
wobei die reflektierende holographische bildformende Optik (12) eine Ausgangspupille aufweist und das Volumenhologramm innerhalb der Ausgangspupille der reflektierenden holographischen bildformenden Optik (12) angeordnet ist;
wobei das System derart angeordnet ist, dass Strahlen, die von dem Volumenhologramm gebrochen werden, mit einem normalen Einfall auf der reflektierenden holographischen bildformenden Optik (12) einfallen; und
wobei das Volumenhologramm dafür konfiguriert ist, Licht nullter Ordnung, das von der reflektierenden holographischen bildformenden Optik reflektiert wird, zu empfangen und gebrochen umzulenken, und das Licht, das von der reflektierenden holografischen bildformenden Optik reflektierend gebrochen wurde, ungebrochen zu der Ausgangspupille der reflektierenden holographischen bildformenden Optik (12) zu leiten.

2. Optisches System nach Anspruch 1, wobei die bildformende Optik (12) ein bildformendes Hologramm enthält, das eine kodierte Fresnellinse umfasst, die dafür konfiguriert ist, eine Fokusebene des geformten Bildes (16) zu verschieben.

3. Optisches System nach Anspruch 2, ferner eine physikalische Linse (52) umfassend, die dem Volumenhologramm nachgelagert angeordnet ist und dafür konfiguriert ist, die Fokusebene des geformten Bildes (16) weiter zu verschieben.

4. Optisches System nach Anspruch 1, wobei das Volumenhologramm dafür konfiguriert ist, das kohärente Licht (14) auf die bildformende Optik (12) zu reflektieren.

5. Optisches System nach Anspruch 1, wobei das Volumenhologramm dafür konfiguriert ist, das kohärente Licht (14) auf die bildformende Optik (12) zu übertragen.

6. Optisches System nach Anspruch 1, wobei das Volumenhologramm ein oder mehrere Bragg-Gitter (44) umfasst.

7. Verfahren zum Formen eines Bildes (16), umfassend:
Emittieren eines ersten Strahls kohärenten Lichts (14);
Empfangen, an einem ersten Volumenhologramm, des ersten Strahls kohärenten Lichts (14) und Brechen des ersten Strahls kohärenten Lichts (14) in einen zweiten Strahl, der in eine Dimension expandiert wird;
Empfangen, an einem zweiten Volumenhologramm, des zweiten Strahls kohärenten Lichts (14) und Brechen des zweiten Strahls kohärenten Lichts (14) in einen dritten Strahl, der in eine zweite, unterschiedliche Richtung expandiert wird; und
Empfangen des dritten Strahls kohärenten Lichts (14) an einer reflektierenden holografischen bildformenden Optik, die dem zweiten Volumenhologramm nachgelagert angeordnet ist und räumliches Modulieren dieses Lichts zur Formung des gewünschten Bildes (16);
wobei die reflektierende holografische bildformende Optik (12) eine Ausgangspupille aufweist und das zweite Volumenhologramm innerhalb der Ausgangspupille der reflektierenden holographischen bildformenden Optik (12) angeordnet ist;
wobei das System derart angeordnet ist, dass Strahlen, die von dem zweiten Volumenhologramm gebrochen werden, mit einem normalen Einfall auf der reflektierenden holografischen bildformenden Optik (12) einfallen; und
wobei das zweite Volumenhologramm dafür konfiguriert ist, Licht nullter Ordnung, das von der reflektierenden holographischen bildformenden Optik reflektiert wird, zu empfangen und gebrochen umzulenken, und das Licht, das von der reflektierenden holografischen bildformenden Optik (12) reflektierend gebrochen wurde, ungebrochen zu der Ausgangspupille der reflektierenden holografischen bildformenden Optik (12) zu leiten.

## Revendications

1. Système optique comprenant :
une source d'éclairage (38) configurée pour émettre de la lumière cohérente (14) ;
un hologramme volumique positionné pour recevoir et diffracter la lumière cohérente (14) ; et
une optique formatrice d'image holographique réfléchissante (12) agencée en aval de l'hologramme volumique et configurée pour recevoir la lumière cohérente (14) diffractée par l'hologramme volumique et pour moduler spatialement la lumière cohérente (14) afin de former une image souhaitée (16) ;
dans lequel l'optique formatrice d'image holographique réfléchissante (12) a une pupille de sortie et l'hologramme volumique est situé dans la pupille de sortie de l'optique formatrice d'image holographique réfléchissante (12) ;
dans lequel le système est agencé de sorte que les rayons diffractés par l'hologramme volumique soient incidents avec une incidence normale sur l'optique formatrice d'image holographique réfléchissante (12) ; et
dans lequel l'hologramme volumique est configuré pour recevoir et dévier par diffraction une lumière d'ordre zéro réfléchie par l'optique formatrice d'image holographique réfléchissante et laisser passer sans diffraction la lumière diffractée par réflexion par l'optique formatrice d'image holographique réfléchissante vers la pupille de sortie de l'optique formatrice d'image holographique réfléchissante (12).

2. Système optique selon la revendication 1, dans lequel l'optique formatrice d'image (12) comprend un hologramme formateur d'image comprenant une lentille de Fresnel codée configurée pour décaler un plan focal de l'image formée (16).

3. Système optique selon la revendication 2, comprenant en outre une lentille physique (52) agencée en aval de l'hologramme volumique et configurée pour encore décaler le plan focal de l'image formée (16).

4. Système optique selon la revendication 1, dans lequel l'hologramme volumique est configuré pour réfléchir la lumière cohérente (14) sur l'optique formatrice d'image (12).

5. Système optique selon la revendication 1, dans lequel l'hologramme volumique est configuré pour transmettre la lumière cohérente (14) sur l'optique formatrice d'image (12).

6. Système optique selon la revendication 1, dans lequel l'hologramme volumique comprend un ou plusieurs réseaux de Bragg (44).

7. Procédé de formation d'une image (16), comprenant :
l'émission d'un premier faisceau de lumière cohérente (14) ;
la réception sur un premier hologramme volumique du premier faisceau de lumière cohérente (14) et la diffraction du premier faisceau de lumière cohérente (14) dans un second faisceau expansé dans une direction ;
la réception sur un second hologramme volumique du deuxième faisceau de lumière cohérente (14) et la diffraction du deuxième faisceau de lumière cohérente dans un troisième faisceau expansé dans une seconde direction différente ; et
la réception du troisième faisceau de lumière cohérente (14) sur une optique formatrice d'image holographique réfléchissante agencée en aval du second hologramme volumique et la modulation spatiale de cette lumière pour former l'image souhaitée (16) ;
dans lequel l'optique formatrice d'image holographique réfléchissante (12) aune pupille de sortie et le second hologramme volumique est situé dans la pupille de sortie de l'optique formatrice d'image holographique réfléchissante (12) ;
dans lequel le système est agencé de sorte que les rayons diffractés par le second hologramme volumique soient incidents avec une incidence normale sur l'optique formatrice d'image holographique réfléchissante (12) ; et
dans lequel le second hologramme volumique est configuré pour recevoir et dévier par diffraction de la lumière d'ordre zéro réfléchie par l'optique formatrice d'image holographique réfléchissante et laisser passer sans diffraction la lumière diffractée par réflexion par l'optique formatrice d'image holographique réfléchissante (12) vers la pupille de sortie de l'optique formatrice d'image holographique réfléchissante (12).
